# EUROPÄISCHE PATENTANMELDUNG

(11) **EP 0 893 464 A1**
(43) Veröffentlichungstag der Anmeldung: **27.01.1999**
(21) Anmeldenummer: 98113584.1
(22) Anmeldetag: 21.07.1998
(51) Int. Cl.: C08G 69/26, C08L 77/06

(54) **Polyamidformmasse**

(30) Priorität: 21.07.1997 DE 19731229
(71) Anmelder: BASF AKTIENGESELLSCHAFT, 67056 Ludwigshafen (DE)
(72) Erfinder: Grutke, Stefan, Dr., 67434 Neustadt (DE); Glück, Alexander, Dr., 67251 Freinsheim (DE); Pipper, Gunter, 67098 Bad Dürkheim (DE); Götz, Walter, Dr, 67067 Ludwigshafen (DE); Wolf, Peter, Dr., 67281 Kirchheim (DE); Richter, Konrad, Dr., 67069 Ludwigshafen (DE); Weiss, Hans-Peter, Dr., 67112 Mutterstadt (DE)
(74) Vertreter: Isenbruck, Günter, Dr.

(57) **Zusammenfassung**

Die Formmasse umfaßt die Komponente A und gegebenenfalls die Komponenten B bis D, deren Gesamtgewicht 100 Gew.-% ergibt:
a: 40 bis 100 Gew.-% eines statistischen Copolyamids als Komponente A aus
a1: 95,1 bis 99,9 Gew.-% Komponente A1 aus äquimolaren Mengen mindestens eines linearen aliphatischen Diamins und mindestens einer linearen aliphatischen Dicarbonsäure
a2: 0,1 bis 4,9 Gew.-% Komponente A2 aus äquimolaren Mengen mindestens eines linearen aliphatischen Diamins und Isophthalsäure
b: 0 bis 30 Gew.-% mindestens eines Schlagzähmodifiers für Polyamide als Komponente B
c: 0 bis 30 Gew.-% mindestens eines für Polyammide geeigneten Füllstoffes als Komponente C
d: 0 bis 10 Gew.-% üblicher Zusatzstoffe für Polyamide als Komponente D.

## Beschreibung

Die Erfindung betrifft Formmassen, die ein statistisches Copolyamid enthalten oder aus ihm bestehen, Verfahren zu ihrer Herstellung, ihre Verwendung zur Herstellung von Formkörpern, Fasern oder Folien und daraus hergestellte Formkörper, Fasern oder Folien.

Eine Vielzahl von Polyamidformmassen ist bekannt. Dabei wird die Zusammensetzung der Formmassen dem gewünschten Eigenschaftsprofil der Formmassen angepaßt. Insbesondere bei glasfaserverstärkten Polyamidformmassen sollen neben vorteilhaften mechanischen Eigenschaften auch eine glänzende und glatte Oberfläche der daraus hergestellten Formkörpern zugänglich sein. Die verarbeitungstechnischen Eigenschaften der Formmassen sollen dabei nicht beeinträchtigt sein.

In der DE-C-43 21 247 sind Polyamid-Harzmassen beschrieben, die neben Hexamethylenadipinsäureamid-Einheiten aus Adipinsäure und Hexamethylendiamin auch 10 bis 25 Gew.-% eines Hexamethylenisophthalamids aus Isophthalsäure und Hexamethylendiamin enthalten. Zudem enthalten die Harzmassen 5 bis 70 Gew.-% mindestens eines anorganischen Füllstoffs, insbesondere Glasfasern. Die Formmassen sollen homogen sein, gute Verformungseigenschaften und einen hohen Oberflächenglanz aufweisen, bei gleichzeitig hoher Festigkeit, Steifheit und Dimensionsstabilität. Insbesondere wird ein hoher Oberflächenglanz der Formmassen angestrebt.

In JP-A 80/062 958 sind Gemische aus Polyamiden und 5 bis 50 Gew.-% anorganischen Faserverstärkungsmaterialien beschrieben. Die Polyamide können dabei 30 bis 100 Gew.- % Hexamethylenisophthalamid-Einheiten aufweisen. Insbesondere werden Hexamethylenisophthalamid-Polymere, Hexamethylenisophthalamid/Hexamethylenterephthalamid-Copolymere und Hexamethylenisophthalamid/Caproamid-Copolymere beschrieben.

In JP-A 93/339 494 sind Harzzusammensetzungen mit hoher Festigkeit und Steifheit, niedriger Wasserabsorption und gutem Aussehen beschrieben. Sie enthalten beispielsweise 20 Gew.- % eines halbaromatischen Polyamidharzes aus 50 Gew.-% Hexamethylenadipamid-Einheiten aus Adipinsäure und Hexamethylendiamin, 30 Gew.- % Hexamethylenisophthalamid-Einheiten aus Isophthalsäure und Hexamethylendiamin und 20 Gew.-% Hexamethylenterephthalamid-Einheiten aus Terephthalsäure und Hexamethylendiamin neben 80 Gew.-% eines Polyphenylenetherharzes.

In J.S. Ridgway, J. Polym. Sc. Vol. 8, Teil A-1, (1970) Seiten 3089 bis 3111 sind Struktur-Eigenschaftsbeziehungen von Nylon-66-Copolyamiden beschrieben, die Ringstrukturen enthalten. Die Ringstruktur wurde dabei mit der Glasübergangstemperatur und dem Schmelzpunkt korreliert. Es werden Copolyamide beschrieben, die auf Adipinsäure und Hexamethylendiamin basieren und 10 bis 30 mol-% Isophthalsäure-Einheiten enthalten.

In der WO 91/13194 sind verbesserte Ausgangsmaterialien zur Herstellung von Nylongarnen beschrieben. Es werden beispielsweise statistische Copolymere aus 87 Gew.-% Adipinsäure/Hexamethylendiamin und 13 Gew.-% Isophthalsäure/Hexamethylendiamin beziehungsweise 92 Gew.-% Adipinsäure/Hexamethylendiamin und 8 Gew.-% Isophthalsäure/Hexamethylendiamin beschrieben. Aus ihnen lassen sich gute Garne zur Herstellung von Teppichen erhalten.

Die bekannten Copolyamide beziehungsweise Formmassen daraus weisen nach einer Wärmebehandlung oft unzureichende mechanische Eigenschaften auf.

Aufgabe der vorliegenden Erfindung ist die Bereitstellung von Copolyamid enthaltenden Formmassen, die insbesondere mit Füllstoffen verstärkt werden können und neben hohem Oberflächenglanz, guter Verformbarkeit und hervorragender Festigkeit, Steifheit und Dimensionsstabilität auch sehr gute mechanische Eigenschaften nach einer Wärmebehandlung aufweisen.

Gelöst wird die Aufgabe durch Bereitstellung einer Formmasse, umfassend die Komponente A und gegebenenfalls die Komponenten B bis D, deren Gesamtgewicht 100 Gew.-% ergibt:
a: 40 bis 100 Gew.-% eines statistischen Copolyamids als Komponente A aus
a1: 95,1 bis 99,9 Gew.-% Komponente A1 aus äquimolaren Mengen mindestens eines linearen aliphatischen Diamins und mindestens einer linearen aliphatischen Dicarbonsäure
a2: 0,1 bis 4,9 Gew.-% Komponente A2 aus äquimolaren Mengen mindestens eines linearen aliphatischen Diamins und Isophthalsäure
b: 0 bis 30 Gew.-% mindestens eines Schlagzähmodifiers für Polyamide als Komponente B
c: 0 bis 30 Gew.-% mindestens eines für Polyamide geeigneten Fülstoffes als Komponente C
d: 0 bis 10 Gew.-% üblicher Zusatzstoffe für Polyamide als Komponente D.

Aus den erfindungsgemäßen Formmassen sind Formkörper herstellbar, die sehr gute verarbeitungstechnische Eigenschaften und mechanische Eigenschaften auch nach einer fortgesetzten Wärmebehandlung aufweisen und in Verbindung mit Füllstoffen, wie Glasfasern, insbesondere in glasfaserverstärkten Spritzgußprodukten, eine sehr glatte Oberfläche mit hohem Glanz aufweisen.

Es wurde gefunden, daß Formmassen, die beispielsweise neben einer Komponente A1 aus äquimolaren Mengen von Hexamethylendiamin und Adipinsäure 0,1 bis 4,9 Gew.-% einer Komponente A2 aus äquimolaren Mengen von beispielsweise Hexamethylendiamin und Isophthalsäure aufweisen, diese Eigenschaften besitzen. Insbesondere gegenüber Formmassen, die einen höheren Anteil der Komponente A2 aufweisen (vergleiche DE-C-43 21 247) sind die mechanischen Eigenschaften insbesondere nach fortgesetzter Wärmeeinwirkung verbessert.

Nachstehend werden die Komponenten der erfindungsgemäßen Formmassen beschrieben. Dabei ergibt die Gesamtmenge beziehungsweise das Gesamtgewicht der Komponenten A und gegebenenfalls B bis D 100 Gew.-%.

### Komponente A

Komponente A liegt in den erfindungsgemäßen Formmassen in einer Menge von 40 bis 100, vorzugsweise 50 bis 90, insbesondere 70 bis 90 Gew.-% vor. Liegen Komponenten C und D vor, so beträgt der Anteil der Komponente A vorzugsweise 48 bis 88, insbesondere 44 bis 84 Gew.-%.

Komponente A ist ein statistisches Copolyamid aus 95,1 bis 99,0, vorzugsweise 95,1 bis 98,5, insbesondere 95,3 bis 97,5, speziell 95,5 bis 97,0 Gew.-% der Komponente A1 und 0,1 bis 4,9, vorzugsweise 1,5 bis 4,9, insbesondere 2,5 bis 4,7, speziell 3,0 bis 4,5 Gew.-% der Komponente A2.

### Komponente A1

Komponente A1 besteht aus äquimolaren Mengen mindestens eines linearen aliphatischen Diamins und mindestens einer linearen aliphatischen Dicarbonsäure. Als lineare aliphatische Diamine werden vorzugsweise Diamine der allgemeinen Formel H₂N-(CH₂-)ₓNH₂ eingesetzt, in denen x eine ganze Zahl im Bereich von 4 bis 20, vorzugsweise 4 bis 12, insbesondere 4 bis 8 ist. Besonders bevorzugt wird Hexamethylendiamin eingesetzt.

Als lineare aliphatische Dicarbonsäuren werden vorzugsweise Dicarbonsäuren der allgemeinen Formel HOOC-(CH₂-)_{y}COOH eingesetzt, in denen y eine ganze Zahl im Bereich von 4 bis 20, vorzugsweise 4 bis 12, insbesondere 4 bis 8 ist. Besonders bevorzugt wird Adipinsäure eingesetzt.

Es können Gemische linearer aliphatischer Diamine eingesetzt werden. Vorzugsweise wird jedoch nur ein lineares aliphatisches Diamin eingesetzt. Ebenso können Gemische linearer aliphatischer Dicarbonsäuren eingesetzt werden. Vorzugsweise wird ebenfalls nur eine lineare aliphatische Dicarbonsäure eingesetzt.

### Komponente A2

Komponente A2 besteht aus äquimolaren Mengen mindestens eines linearen aliphatischen Diamins und Isophthalsäure. Das lineare aliphatische Diamin kann dabei wie vorstehend für Komponente A1 angegeben aufgebaut sein. Vorzugsweise entspricht das lineare aliphatische Diamin dem linearen aliphatischen Diamin der Komponente A1. Besonders bevorzugt wird Hexamethylendiamin eingesetzt. Es können Gemische mehrerer linearer aliphatischer Diamine eingesetzt werden, vorzugsweise wird jedoch nur ein lineares aliphatisches Diamin eingesetzt.

Die Viskositätszahl der Komponente A liegt vorzugsweise im Bereich von 70 bis 300, besonders bevorzugt 100 bis 250, insbesondere 100 bis 150. Die Viskositätszahl wird dabei als 0,5 Gew.-%ige Lösung in 96 Gew.-%iger Schwefelsäure bei 25°C bestimmt.

### Komponente B

Der Anteil der Komponente B in den erfindungsgemäßen Formmassen beträgt 0 bis 30, vorzugsweise 1 bis 20, besonders bevorzugt 3 bis 15 Gew.-%. In Formmassen, in denen Komponenten B und D vorliegen, beträgt der Anteil vorzugsweise 1 bis 21, besonders bevorzugt 3 bis 16 Gew.-%.

Als Komponente B wird mindestens ein Schlagzähmodifier für Polyamide eingesetzt.

Schlagzähmodifizierende Polymere, die die Zähigkeit der Komponente A erhöhen, sind Copolymere des Ethylens mit Propylen sowie gegebenenfalls einem konjugierten Dien (EP-(Ethylen/Propylen-Copolymere)- beziehungsweise EPDM (Ethylen/Propylen-Dien-Terpolymere)-Kautschuke), wobei der Ethylengehalt bevorzugt 45 und insbesondere 50 Gew.-% (bezogen auf 100 Gew.-% der Komponente B) beträgt.

Derartige Schlagzähmodifier sind allgemein bekannt, weshalb für weitere Einzelheiten hier auf die Publikation von Cartasegna in Kautschuk, Gummi, Kunststoffe 39, 1186-91 (1986) verwiesen sei.

Kautschuke, die die Zähigkeit von Polyamiden erhöhen, weisen im allgemeinen zwei wesentliche Merkmale auf; sie enthalten einen elastomeren Anteil, der eine Glastemperatur von weniger als - 10°C, vorzugsweise von weniger als -30°C aufweist und sie enthalten mindestens eine funktionelle Gruppe, die mit dem Polyamid reagieren kann. Geeignete funktionelle Gruppen sind beispielsweise Carbonsäure-, Carbonsäureanhydrid-, Carbonsäureester-, Carbonsäureamid-, Carbonsäureimid-, Amino-, Hydroxyl-, Epoxid-, Urethan- und Oxazolingruppen.

Als Kautschuke, die die Zähigkeit von Polyamiden erhöhen, seien zum Beispiel folgende genannt:

EP- beziehungsweise EPDM-Kautschuke, die mit den vorstehenden funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat. Diese Monomeren können in der Schmelze oder in Lösung, gegebenenfalls in Gegenwart eines Radikalstarters wie Cumolhydroperoxid, auf das Polymere aufgepfropft werden.

Weiterhin seien Copolymere von α-Olefinen genannt. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth)acrylat und weiterhin Vinylester, insbesondere Vinylacetat, als geeignet erwiesen. Mischungen verschiedener Comonomere können ebenfalls eingesetzt werden. Als besonders geeignet haben sich Copolymere des Ethylens mit Ethyl- oder Butylacrylat und Acrylsäure und/oder Maleinsäureanhydrid erwiesen.

Die Copolymeren können in einem Hochdruckprozeß bei einem Druck von 400 bis 4500 bar oder durch Pfropfen der Comonomeren auf das Poly-α-Olefin hergestellt werden. Der Anteil des α-Olefins an dem Copolymeren liegt im allgemeinen im Bereich von 99,95 bis 55 Gew.-%.

Als weitere Gruppe von geeigneten Elastomeren sind Kern-Schale-Pfropfkautschuke zu nennen. Hierbei handelt es sich um in Emulsion hergestellte Pfropfkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von höchstens 0°C. Diese Produkte weisen eine Struktur aus einem Kern und mindestens einer Schale auf, wobei sich die Struktur durch die Reihenfolge der Monomerzugabe ergibt. Die weichen Bestandteile leiten sich unter anderem von Butadien, Isopren, Alkylacrylaten oder Alkylmethacrylaten und gegebenenfalls weiteren Comonomeren ab. Als geeignete Comonomere sind hier zum Beispiel Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich unter anderem von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen erfolgt hierbei vorzugsweise durch den Zusatz geeigneter funktionalisierter Monomere bei der Polymerisation der letzten Schale. Geeignete funktionalisierte Monomere sind beispielsweise Maleinsäure, Maleinsäureanhydrid, Mono- oder Diester der Maleinsäure, tert.-Butyl(meth)acrylat, Acrylsäure, Glycidyl(meth)acrylat und Vinyloxazolin. Der Anteil an Monomeren mit funktionellen Gruppen beträgt im allgemeinen 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt im allgemeinen 1:9 bis 9:1, bevorzugt 3:7 bis 8:2.

Derartige Kautschuke, die die Zähigkeit von Polyamiden erhöhen, sind an sich bekannt und beispielsweise in der EP-A-0 208 187 beschrieben.

Eine weitere Gruppe von geeigneten Schlagzähmodifiern sind thermoplastische Polyester-Elastomere. Unter Polyesterelastomeren werden dabei segmentierte Copolyetherester verstanden, die langkettige Segmente, die sich in der Regel von Poly(alkylen)etherglykolen und kurzkettige Segmente, die sich von niedermolekularen Diolen und Dicarbonsäuren ableiten, enthalten. Derartige Produkte sind an sich bekannt und in der Literatur, zum Beispiel in der US 3,651,015, beschrieben. Auch im Handel sind entsprechende Produkte unter den Bezeichnungen Hytrel® (Du Pont), Arnitel® (Akzo) und Pelprene® erhältlich.

Selbstverständlich können auch Mischungen verschiedener Kautschuke eingesetzt werden.

### Komponente C

Komponente C liegt in den erfindungsgemäßen Formmassen in einer Menge von 0 bis 60, vorzugsweise 10 bis 50, insbesondere 10 bis 30 Gew.-% vor. Liegen die Komponenten B und D in den Formmassen vor, so beträgt der Anteil vorzugsweise 10 bis 50, besonders bevorzugt 10 bis 30 Gew.-%.

Als Komponente C wird mindestens ein Füllstoff eingesetzt.

Die verwendeten Füllstoffe sind vorzugsweise faser- oder teilchenförmig. Insbesondere handelt es sich um Verstärkungsmittel, die auch als Gemisch eingesetzt werden können.

Bevorzugte Verstärkungsmittel sind Kohlenstofffasern und/oder Glasfasern.

Die verwendeten Glasfasern können aus E-, A- oder C-Glas sein und sind vorzugsweise mit einer Schlichte und einem Haftvermittler ausgerüstet. Ihr Durchmesser liegt im allgemeinen im Bereich zwischen 6 und 20 µm. Es können sowohl Endlosfasern (rovings) als auch Schnittglasfasern (staple) mit einer Länge von 1 bis 20 mm eingesetzt werden.

Weiterhin können Füll- oder Verstärkungsstoffe, wie Glaskugeln, Mineralfasern, Whisker, Aluminiumoxidfasern, Glimmer, Quarzmehl und Wollastonit zugesetzt werden.

Außerdem können Metallflocken (z.B. Aluminiumflocken der Fa. Transmet Corp.), Metallpulver, Metallfasern, metallbeschichtete Füllstoffe z.B. nickelbeschichtete Glasfasern sowie andere Zuschlagstoffe, die elektromagnetische Wellen abschirmen, beigemischt werden. Insbesondere kommen Aluminiumflocken (K 102 der Fa. Transmet) für EMI-Zwecke (electro-magnetic interference) in Betracht. Ferner können die Massen mit zusätzlichen Kohlenstofffasern, Ruß, insbesondere Leitfähigkeitsruß oder nickelbeschichteten C-Fasern vermischt werden.

Weiterhin sind delaminierte Schichtsilikate als Füllstoffe geeignet.

Die erfindungsgemäßen Formmassen können 5 bis 15, vorzugsweise 1 bis 10 und insbesondere 2 bis 9 Gew.-% eines delaminierten Schichtsilikates (Phyllosilikat) enthalten. Derartige Schichtsilikate sind beispielsweise in Giannelis, Adv. Mat. 1996, 8-1, 29 beschrieben. Unter einem Schichtsilikat versteht man im allgemeinen Silikate, in welchen die SiO₄-Tetraeder in zweidimensionalen unendlichen Netzwerken verbunden sind. Die empirische Formel für das Anion lautet (Si₂O₅²⁻)ₙ. Die einzelnen Schichten sind durch die zwischen ihnen liegenden Kationen miteinander verbunden, wobei meistens als Kationen Na, K, Mg, Al oder/und Ca in den natürlich vorkommenden Schichtsilikaten vorliegen.

Die Schichtdicken derartiger Silikate vor der Delaminierung betragen üblicherweise von 5 bis 100 Å, vorzugsweise 5 bis 50 und insbesondere 8 bis 20 Å.

Als Beispiel für synthetische und natürliche Schichtsilikate (Phyllosilikate) seien Montmorillonit, Smectit, Illit, Sepiolit, Palygorskit, Muscovit, Allevardit, Amesit, Hectorit, Fluorhectorit, Saponit, Beidellit, Talkum, Nontronit, Stevensit, Bentonit, Glimmer, Vermiculit, Fluorvermiculit, Halloysit und Fluor enthaltende synthetische Mica-Typen genannt.

Unter einem delaminierten Schichtsilikat im Sinne der Erfindung sollen Schichtsilikate verstanden werden, bei welchen durch Umsetzung mit sogenannten Hydrophobierungsmitteln und gegebenenfalls anschließender Zugabe von Monomeren oder Oligomeren der erfindungsgemäßen Copolyamide (auch als Quellung bezeichnet) die Schichtabstände zunächst vergrößert wurden.

Durch anschließende Polykondensation oder Mischung zum Beispiel durch Konfektionierung des hydrophobierten und gegebenenfalls gequollenen Schichtsilikates mit dem erfindungsgemäßen Copolyamiden erfolgt die Delaminierung der Schichten, welche im Formkörper vorzugsweise zu einem Schichtabstand von mindestens 40 Å, vorzugsweise mindestens 50 Å führt.

Zur Vergrößerung der Schichtabstände (Hydrophobierung) werden die Schichtsilikate (vor der Herstellung der erfindungsgemäßen Formmassen) mit sogenannten Hydrophobierungsmitteln umgesetzt, welche of auch als Oniumionen oder Oriumsalze bezeichnet werden.

Die Kationen der Schichtsilikate werden durch organische Hydrophobierungsmittel ersetzt, wobei durch die Art des organischen Restes die gewünschten Schichtabstände eingestellt werden können, die sich nach der Art des jeweiligen Monomeren oder Polymeren, in welches das Schichtsilikat eingebaut werden soll, richten.

Der Austausch der Metallionen kann vollständig oder teilweise erfolgen. Bevorzugt ist ein vollständiger Austausch der Metallionen. Die Menge der austauschbaren Metallionen wird üblicherweise in Milliäquivalenten (meq) pro 100 g Schichtsilikat angegeben und als Ionensstauschkapazität bezeichnet.

Bevorzugt sind Schichtsilikate mit einer Kationenaustauschkapazität von mindestens 50, vorzugsweise 80 bis 130 meq/100 g.

Geeignete organische Hydrophobierungsmittel leiten sich von Oxonium-, Ammonium-, Phosphonium- und Sulfoniumionen ab, welche einen oder mehrere organische Reste tragen können.

Als geeignete Hydrophobierungsmittel seien solche der allgemeinen Formeln I und/oder II genannt:

[XR¹R²R³R⁴]ⁿ⁺ Zⁿ (I)

[YR¹R²R³]ⁿ⁺Zⁿ⁻ (II)

wobei in den Substituenten
- R¹, R², R³, R⁴: unabhängig voneinander für Wasserstoff, einen geradkettigen, verzweigten, gesättigten oder ungesättigten Kohlenwasserstoffrest mit 1 bis 40, vorzugsweise 1 bis 20 C-Atomen, welcher gegebenenfalls mindestens eine funktionelle Gruppe tragen kann, oder wobei 2 der Reste miteinander verbunden sind, insbesondere zu einem heterocyclischen Rest mit 5 bis 10 C-Atomen,
- X: für Phosphor oder Stickstoff,
- Y: für Sauerstoff oder Schwefel,
- n: für eine ganze Zahl von 1 bis 5, vorzugsweise 1 bis 3 und
- Z: für ein Anion
stehen.

Geeignete funktionelle Gruppen sind Hydroxyl-, Nitro- oder Sulfogruppen, wobei Carboxylgruppen besonders bevorzugt sind, da durch derartige funktionelle Gruppen eine verbesserte Anbindung an die Endgruppen des Polyamids erfolgt.

Geeignete Anionen Z leiten sich von Protonen liefernden Säuren, insbesondere Mineralsäuren ab, wobei Halogene wie Chlor, Brom, Fluor, Iod, Sulfat, Sulfonat, Phosphat, Phosphonat, Phosphit und Carboxylat, insbesondere Acetat, bevorzugt sind.

Die als Ausgangsstoffe verwendeten Schichtsilikate werden in der Regel in Form einer Suspension umgesetzt. Das bevorzugte Suspendiermittel ist Wasser, gegebenenfalls in Mischung mit Alkoholen, insbesondere niederen Alkoholen mit 1 bis 3 Kohlenstoffatomen. Es kann vorteilhaft sein, zusammen mit dem wäßrigen Medium einen Kohlenwasserstoff, zum Beispiel Heptan, einzusetzen, da die hydrophobierten Schichtsilikate mit Kohlenwasserstoffen gewöhnlich verträglicher sind als mit Wasser.

Weitere geeignete Beispiele für Suspendiermittel sind Ketone und Kohlenwasserstoffe. Gewöhnlich wird ein mit Wasser mischbares Lösungsmittel bevorzugt. Bei der Zugabe des Hydrophobierungsmittels zum Schichtsilikat tritt ein Ionenaustausch ein, wodurch das Schichtsilikat üblicherweise hydrophober wird und aus der Lösung ausfällt. Das als Nebenprodukt des Ionenaustauschs entstehende Metallsalz ist vorzugsweise wasserlöslich, so daß das hydrophobierte Schichtsilikat als kristalliner Feststoff durch zum Beispiel Abfiltrieren abgetrennt werden kann.

Der Ionenaustausch ist von der Reaktionstemperatur weitgehend unabhängig. Die Temperatur liegt vorzugsweise über dem Kristallisationspunkt des Mediums und unter seinem Siedepunkt. Bei wäßrigen Systemen liegt die Temperatur zwischen 0 und 100°C, vorzugsweise zwischen 40 und 80°C.

Für die erfindungsgemäßen Copolyamide beziehungsweise Formmassen sind Alkylammoniumionen bevorzugt, welche insbesondere durch Umsetzung von geeigneten ω-Aminocarbonsäuren wie ω-Aminododecansäure, ω-Aminoundecansäure, ω-Aminobuttersäure, ω-Aminocaprylsäure oder ω-Aminocapronsäure mit üblichen Mineralsäuren, beispielsweise Salzsäure, Schwefelsäure oder Phosphorsäure oder Methylierungsmitteln wie Methyliodid erhältlich sind.

Weitere bevorzugte Alkylammoniumionen sind Laurylammonium-, Myristylammonium-, Palmitylammonium-, Stearylammonium-, Pyridinium-, Octadecylammonium-, Monomethyloctadecylammonium- und Dimethyloctadecylammoniumionen.

Als geeignete Phosphoniumionen seien beispielsweise Docosyltrimethylphosphonium, Hexatriacontyltricyclohexylphosphonium, Octadecyltriethylphosphonium, Dieicosyltriisobutylphosphonium, Methyltrinonylphosphonium, Ethyltrihexadecylphosphonium, Dimethyldidecylphosphonium, Diethyldioctadecylphosphonium, Octadecyldiethylallylphosphonium, Trioctylvinylbenzylphosphonium, Dioctydecylethylhydroxyethylphosphonium, Docosyldiethyldichlorbenzylphosphonium, Octylnonyldecylpropargylphosphonium, Triisobutylpefluordecylphosphonium, Eicosyltrihydroxymethylphosphonium, Triacontyltris-cyanethylphosphonium und Bistrioctylethylendiphosphonium genannt.

Weitere geeignete Hydrophobierungsmittel sind unter anderem in WO 93/4118, WO 93/4117, EP-A-0 398 551 und DE-A 36 32 865 beschrieben.

Nach der Hydrophobierung weisen die Schichtsilikate einen Schichtabstand von 10 bis 40 Å, vorzugsweise von 13 bis 20 Å auf. Der Schichtabstand bedeutet üblicherweise den Abstand von der Schichtunterkante der oberen Schicht zur Schichtoberkante der unteren Schicht. Die Länge der Blättchen beträgt üblicherweise bis zu 2000 Å, vorzugsweise bis zu 1500 Å.

Das auf die vorstehende Weise hydrophobierte Schichtsilikat kann anschließend in Suspension oder als Feststoff mit den Copolyamid-Monomeren oder -Präpolymeren gemischt und die Polykondensation in üblicher Weise durchgeführt werden.

Hierbei ist es möglich, den Schichtabstand weiter zu vergrößern, indem man das Schichtsilikat mit Monomeren beziehungsweise Präpolymeren der erfindungsgemäßen Copolyamide bei Temperaturen von 25 bis 300, vorzugsweise von 100 bis 280 und insbesondere von 200 bis 260°C über eine Verweilzeit von 5 bis 120 Minuten, vorzugsweise von 10 bis 60 Minuten umsetzt (sogenannte Quellung). Je nach Dauer der Verweilzeit und Art des gewählten Monomeren vergrößert sich der Schichtabstand zusätzlich um 10 bis 140, vorzugsweise um 20 bis 50 Å. Anschließend führt man die Polykondensation der Nachkondensation in üblicher Weise durch. Besonders vorteilhaft wird die Polykondensation unter gleichzeitiger Scherung durchgeführt, wobei vorzugsweise Scherspannungen gemäß DIN 11 443 von 10 bis 10⁵ Pa, insbesondere 10² bis 10⁴ Pa vorliegen.

Die delaminierten Schichtsilikate können hierbei zu den Monomeren oder zur Präpolymerschmelze (Entgasungsextruder) hinzugegeben werden.

### Komponente D

Komponente D liegt in den erfindungsgemäßen Formmassen in einer Menge von 0 bis 10, vorzugsweise 0,01 bis 10, insbesondere 0,1 bis 5 Gew.-% vor. Liegen Komponenten B und D vor, so beträgt der Anteil vorzugsweise 0,01 bis 10, besonders bevorzugt 0,1 bis 10 Gew.-%.

Komponente D enthält die üblichen Zusatzstoffen für Polyamide.

Als solche Zusatzstoffe seien beispielsweise genannt: Farbstoffe, Pigmente, Färbemittel, Antistatika, Antioxidantien, Stabilisatoren zur Verbesserung der Thermostabilität, zur Erhöhung der Lichtstabilität, zum Anlieben der Hydrolysebeständigkeit und der Chemikalienbeständigkeit, Mittel gegen die Wärmezersetzung und insbesondere die Schmier-/Gleitmittel, die für die Herstellung von Formkörpern beziehungsweise Formteilen zweckmäßig sind. Das Eindosieren dieser weiteren Zusatzstoffe kann in jedem Stadium des Herstellungsprozesses erfolgen, vorzugsweise jedoch zu einem frühen Zeitpunkt, um frühzeitig die Stabilisierungseffekte (oder andere spezielle Effekte) des Zusatzstoffes auszunutzen. Wärmestabilisatoren beziehungsweise Oxidationsverzögerer sind beispielsweise Metallhalogenide (Chloride, Bromide, Iodide oder Oxide), die sich von Metallen wie Cu oder Mn in Kombination mit Metallen der Gruppe I des Periodensystems der Elemente ableiten (wie Halogenide von Li, Na, K).

Geeignete Stabilisatoren sind die üblichen gehinderten Phenole, aber auch Vitamin E beziehungsweise analog aufgebaute Verbindungen. Auch HALS-Stabilisatoren (Hindered Amine Light Stabilizers), Benzophenone, Resorcine, Salicylate, Benzotriazole wie Tinuvin®P (UV-Absorber 2) - (2H-Benzotriazol-2-yl)-4-methylphenol der CIBA) und andere Verbindungen sind geeignet. Diese werden üblicherweise in Mengen bis zu 2 Gew.-% (bezogen auf das Gesamtgemisch) verwendet.

Ferner können Nukleierungsmittel, wie Talkum oder Polyamid 2.2 eingesetzt werden.

Geeignete Gleit- und Entformungsmittel sind Stearinsäure, Stearylalkohol, Stearinsäureester beziehungsweise allgemein höhere Fettsäuren, deren Derivate und entsprechende Fettsäuregemische mit 12 bis 30 Kohlenstoffatomen. Die Mengen dieser Zusätze liegen im Bereich von 0,05 bis 1 Gew.-%.

Auch Siliconöle, oligomeres Isobutylen oder ähnliche Stoffe kommen als Zusatzstoffe in Frage, die üblichen Mengen betragen 0,05 bis 5 Gew.-%. Pigmente, Farbstoffe, Farbaufheller, wie Ultramarinblau, Phthalocyanine, Titandioxid, Cadmiumsulfide, Derivate der Perylentetracarbonsäure sind ebenfalls verwendbar.

Verarbeitungsmittel und Stabilisatoren wie UV-Stabilisatoren, Schmiermittel und Antistatika werden üblicherweise in Mengen von 0,01 bis 5 Gew.-% verwendet.

Die Erfindung betrifft auch ein Verfahren zur Herstellung der vorstehend beschriebenen Formmassen. Dabei wird zunächst die Komponente A hergestellt und sodann mit dem gegebenenfalls vorliegenden Komponenten B, C und/oder D gemischt. Bevorzugt ist ein Verfahren zur Herstellung der erfindungsgemäßen Formmassen durch
Lösen der Komponenten A1 und A2 in Wasser,
Kondensation des so erhaltenen wäßrigen Gemisches bei einem Druck in einem Bereich von 1 bis 20 bar und einer Temperatur im Bereich von 200 bis 300°C zu einem Präpolymer,
Nachkondensation des so erhaltenen Präpolymers durch Festphasenkondensation mit überhitztem Wasserdampf bei einem Druck im Bereich von 0 bis 5 bar und einer Temperatur im Bereich von 5 bis 50°C unterhalb des Schmelzpunktes und
gegebenenfalls Mischen des Copolyamids A mit den Komponenten B, C und/oder D.

Das Verfahren wird dabei vorzugsweise kontinuierlich durchgeführt. Die näheren Verfahrensbedingungen und die Durchführung des Verfahrens sind in der DE-A-33 21 579 beschrieben.

Das Verfahren kann auch diskontinuierlich durchgeführt werden.

Das Mischen der Komponenten A bis D kann nach an sich bekannten Verfahren erfolgen. Es kann vorteilhaft sein, einzelne Komponenten vorzumischen.

Das Mischen der beispielsweise trockenen Komponenten kann nach allen bekannten Methoden erfolgen. Vorzugsweise geschieht jedoch das Mischen durch gemeinsames Extrudieren, Kneten oder Verwalzen der Komponenten, bevorzugt bei Temperaturen von 180 bis 320°C. Dabei können die Komponenten gemeinsam oder getrennt/nacheinander eindosiert werden.

Die erfindungsgemäßen Formmassen können zur Herstellung von Formkörpern, Fasern und Folien verwendet werden.

Die Herstellung der Formkörper, Fasern oder Folien erfolgt dabei nach bekannten Verfahren.

Die Erfindung betrifft auch die Formkörper, Fasern oder Folien, die aus den vorstehend aufgeführten Formmassen hergestellt sind.

In der beigefügten Zeichnung sind in
Figur 1 die Schlagzähigkeit S in MPa und in
Figur 2 die Bruchspannung B in kJ/m²
für wärmegelagerte Formmassen aufgeführt.

Die Erfindung wird nachstehend anhand von Beispielen näher erläutert.

### Herstellung in kontinuierlichem Prozeß

Die kontinuierliche Herstellung des Copolyamids erfolgte nach dem in der DE-A 33 21 579 beschriebenen Verfahren. Teile sind Gewichtsteile.

VZ: Die Viskositätszahl (VZ) wurde als 0,5%ige Lösung in 96%iger Schwefelsäure bei 25 °C bestimmt.

Triamingehalt: Der Triamingehalt wurde nach vollständiger Hydrolyse der Produkte durch 12stündiges Erhitzen unter Rückfluß mit 18%iger Salzsäure mittels HPLC direkt bestimmt.

### Beispiel 1 3 Gew.-%-Komponente A2

5,622 Teile eines äqumolaren Salzes aus Adipinsäure und Hexamethylendiamin wurden zusammen mit 0,172 Teilen eines ebenfalls äquimolaren Salzes aus Isophthalsäure und Hexamethylendiamin in 3,551 Teilen Wasser bei 85°C gelöst und entsprechend einer Copolyamidmenge von 5 kg/h mittels einer Dosierpumpe in eine Polykondensationsstufe dosiert, binnen 10 Minuten bei 285°C und einem Druck von 5 bar in ein Präpolymer überführt, anschließend in einem Doppelschneckenextruder bei 285°C auf Atmosphärendruck entspannt und in die Granulatform überführt.

Das erhaltene Präpolymer hatte eine Viskositätszahl (VZ) von 66,8 cm³/g, 145 meq/kg Carboxylendgruppen, 145 meq/kg Aminoendgruppen, einen Gehalt an Bishexamethylentriamin von 0,16 ‰ und einen DSC-Schmelzpunkt von 256,5°C.

Das Präpolymer wurde durch kontinuierliche Festphasenkondensation mit überhitztem Wasserdampf binnen 8 Stunden bei 188°C auf eine Endviskosität von VZ = 145 cm³/g nachkondensiert.

### Beispiel 2 4,5 Gew.%-Komponente A2

Analog Beispiel 1 wurden 5,535 Teile eines äquimolaren Salzes aus Adipinsäure und Hexamethylendiamin mit 0,258 Teilen eines ebenfalls äquimolaren Salzes aus Isophthalsäure und Hexamethylendiamin in 3,55 Teilen Wasser bei 85°C gelöst. Die Lösung wurde wie in Beispiel 1 beschrieben polykondensiert. Das dabei erhaltene Präpolymer hatte eine VZ von 65,0 cm³/g, 159 meq/kg Carboxylendgruppen, 160 meq/kg Aminoendgruppen, einen Gehalt an Bishexamethylentriamin von 0,17 ‰ und einen DSC-Schmelzpunkt von 254,7°C.

Das Präpolymer wurde durch kontinuierliche Festphasenkondensation analog Beispiel 1 nachkondensiert. Bei einer Verweilzeit von 9 Stunden und einer Temperatur von 187°C wurde eine Viskositätszahl von 147 cm³/g erhalten.

### Vergleichsbeispiel VI 6,0 Gew. -%-Komponente A2

Analog Beispiel 1 wurden 5,448 Teile eines äquimolaren Salzes aus Adipinsäure und Hexamethylendiamin mit 0,344 Teilen eines ebenfalls äquimolaren Salzes aus Isophthalsäure und Hexamethylendiamin in 3,55 Teilen Wasser bei 85 °C gelöst. Die Lösung wurde wie in Beispiel 1 beschrieben polykondensiert. Das dabei erhaltene Präpolymer hatte eine VZ von 64,0 cm³/g, 163 meq/kg Carboxylendgruppen, 164 meq/kg Aminoendgruppen, einen Gehalt an Bishexamethylentriamin von 0,17 ‰ und einen DSC-Schmelzpunkt von 254,2°C.

Das Polymer wurde durch kontinuierliche Festphasenkondensation analog Beispiel 1 nachkondensiert. Bei einer Verweilzeit von 10 Stunden und einer Temperatur von 188°C wurde eine Viskositätszahl von 148 cm³/g erhalten.

### Vergleichsbeispiel V2 ohne Komponente A2

Analog Beispiel 1 wurden 5,790 Teile eines äqimolaren Salzes aus Adipinsäure und Hexamethylendiamin in 3,55 Teilen Wasser bei 85°C gelöst. Die Lösung wurde wie in Beispiel 1 beschrieben polykondensiert. Das dabei erhaltene Präpolymer hatte eine VZ von 69,5 cm³/g, 134 meq/kg Carboxylendgruppen, 135 meq/kg Aminoendgruppen, einen Gehalt an Bishexamethylentriamin von 0,13 ‰ und einen DSC-Schmelzpunkt von 257,4°C.

Das Polymer wurde durch kontinuierliche Festphasenkondensation analog Beispiel 1 nachkondensiert. Bei einer Verweilzeit von 8 Stunden und einer Temperatur von 188°C wurde eine Viskositätszahl von 146 cm³/g erhalten.

### Vergleichsbeispiel V3

Es wurde ein konfektioniertes Block-co-polyamid, bestehend aus 60,9 Gew.-% Polyamid 66 (Ultramide® A3 BASF, Ludwigshafen), 3,1 Gew.-% Polyamid aus Hexamethylendiamin und Isophthalsäure mit VZ = 72, 35 Gew.-% Glasfasern (CS 3540 der Firma PPG) und 1,0 Gew.-% Ruß (Printex® EP60 der Degussa) hergestellt. Der Anteil an Polyamid aus Hexamethylendiamin und Isophthalsäure betrug 4,5 Gew.%, bezogen auf die gesamte Polyamidmatrix. Diese Vergleichsformmasse dient zur Unterscheidung der erfindungsgemäßen statistischen Copolyamide von bekannten Block-co-polyamiden.

### Mechanische Eigenschaften und Oberflächenbeurteilung

Die mechanischen Eigenschaften sind Tabelle 1 zu entnehmen. Die Proben wurden zuvor gemäß den angegebenen ISO-Normen präpariert.

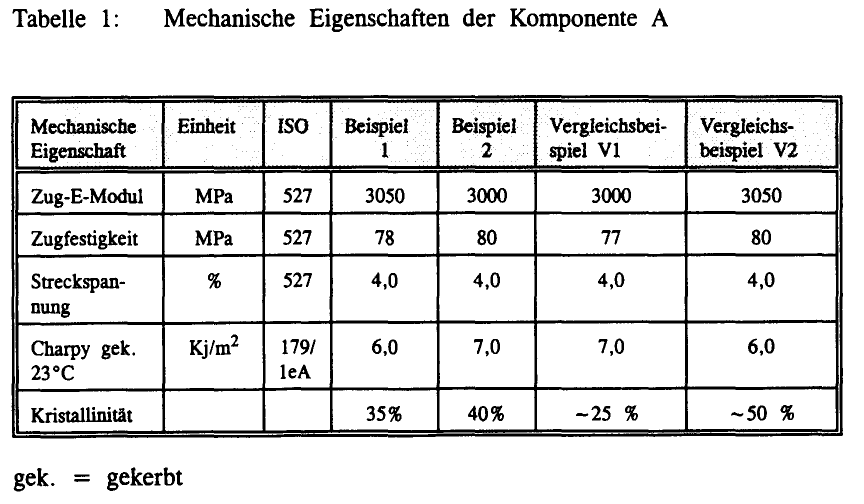

Aus den Komponenten A der Beispiele 1 und 2 sowie der Vergleichsbeispiele V1, V2 und V3 wurden Granulate hergestellt.

Mit einem 2-Wellenextruder der Firma Werner & Pfleiderer (ZSK53) wurden bei 280°C die Granulaten aus den Beispielen 1 und 2 und Verleichsbeispielen V1 bis V3 jeweils mit 30 Gew. -%, bezogen auf die fertige Formmasse, an Glasfasern (CS 3540 der Firma PPG) und 1,0 Gew.-%, bezogen auf das Gesamtgewicht der fertigen Formmasse, Ruß (Printex® EP60 von Degussa) konfektioniert. In Vergleichsbeispiel V3 wurden 35 Gew.-% Glasfasern eingesetzt.

Für die erhaltenen Formmassen wurden die in der nachstehenden Tabelle 2 angegebenen mechanischen Eigenschaften bestimmt, wobei die Probenvorbereitung gemäß der angegebenen technischen Normen erfolgte.

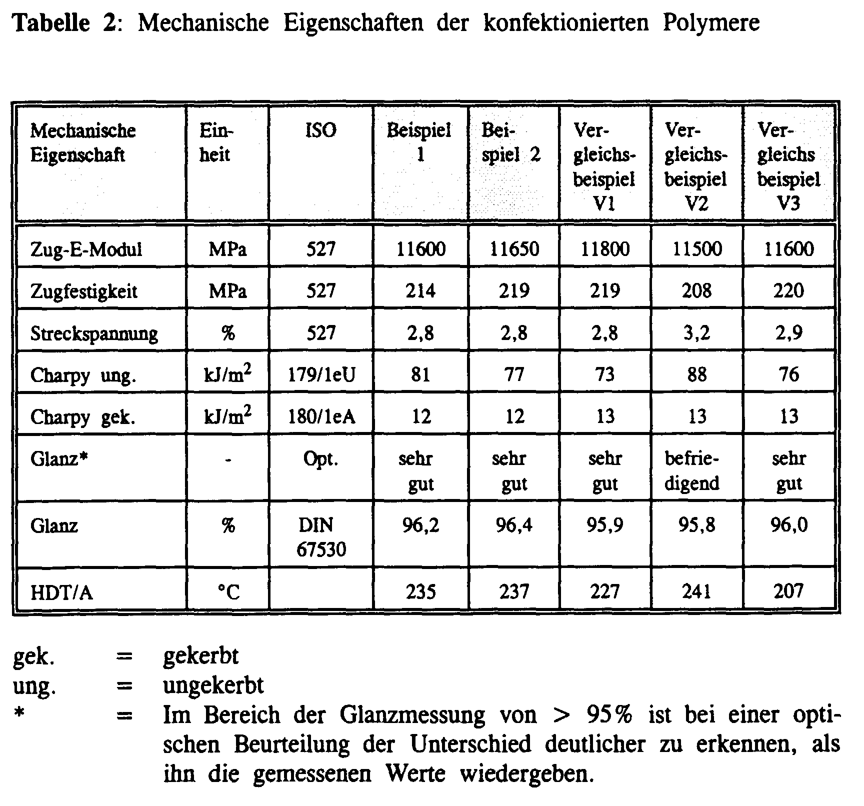

Zudem wurden die Schlagzähigkeit nach ISO 179/1 eU bei 23°C nach einer Wärmelagerung der Proben bei 140°C und die Bruchspannung nach ISO 527 bei 23°C nach einer Wärmelagerung bei 200°C bestimmt.

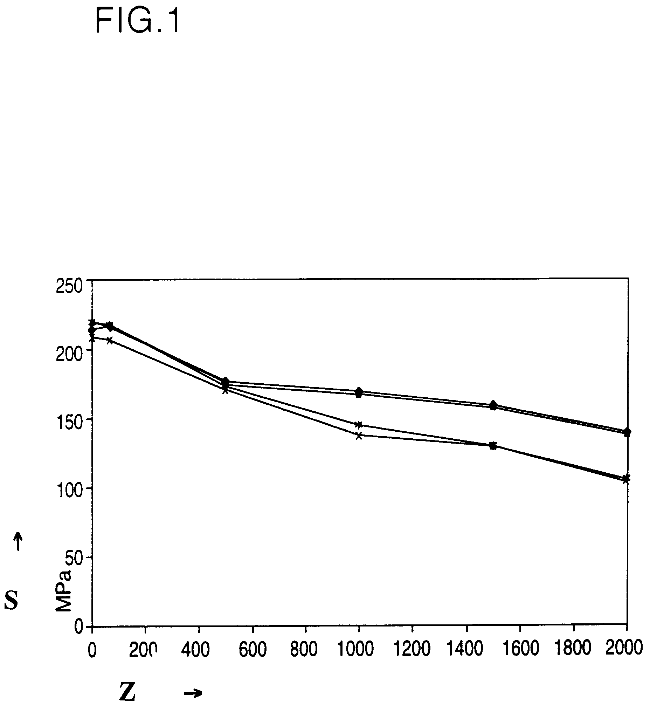

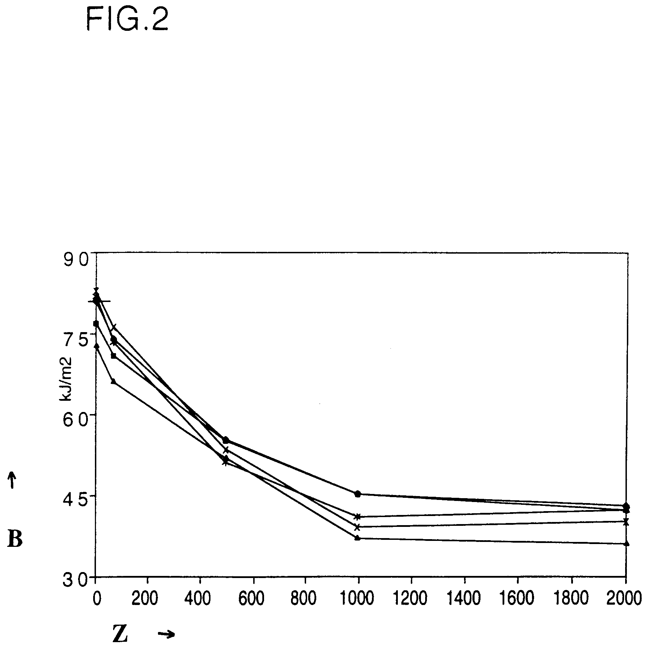

Die Ergebnisse sind in Figur 1 beziehungsweise Figur 2 der beigefügten Zeichnung wiedergegeben.

Aus den Ergebnissen, wie sie in Figuren 1 und 2 dargestellt sind, geht hervor, daß insbesondere bei langandauernder Wärmeanlagerung der Formmassen die Abnahme der Schlagzähigkeit und Bruchspannung für die erfindungsgemäßen Formmassen wesentlich geringer ausfällt als für die Vergleichsformmassen. Ihre Wärmestabilität ist somit höher als bei den Vergleichsformmassen.

In den Figuren bedeuten:
-◆- Beispiel 1
-■- Beispiel 2
-▲- Vergleichspiel 1
-x- Vergleichspiel 2
-∗- Vergleichspiel 3
Z = Zeit in Stunden

## Patentansprüche

1. Formmasse, umfassend die Komponente A und gegebenenfalls die Komponenten B bis D, deren Gesamtgewicht 100 Gew` -% ergibt:
a: 40 bis 100 Gew.-% eines statistischen Copolyamids als Komponente A aus
a1: 95,1 bis 99,9 Gew.-% Komponente A1 aus äquimolaren Mengen mindestens eines linearen aliphatischen Diamins und mindestens einer linearen aliphatischen Dicarbonsäure
a2: 0,1 bis 4,9 Gew.-% Komponente A2 aus äquimolaren Mengen mindestens eines linearen aliphatischen Diamins und Isophthalsäure
b: 0 bis 30 Gew.-% mindestens eines Schlagzähmodifiers für Polyamide als Komponente B
c: 0 bis 30 Gew.-% mindestens eines für Polyamide geeigneten Füllstoffes als Komponente C
d: 0 bis 10 Gew.-% üblicher Zusatzstoffe für Polyamide als Komponente D.

2. Formmasse nach Anspruch 1, dadurch gekennzeichnet, daß in Komponente A der Anteil der Komponente A1 95,1 bis 98,5 Gew.-% und der Anteil der Komponente A2 1,5 bis 4,9 Gew.-% beträgt.

3. Formmasse nach Anspruch 1 oder 2, dadurch gekennzeichnet, daß Komponente A eine Viskositätszahl von 70 bis 300 aufweist.

4. Formmasse nach einem der Ansprüche 1 bis 3, dadurch gekennzeichnet, daß der Anteil der Komponente A 50 bis 90 Gew.-% und der Anteil der Komponente C 10 bis 50 Gew.-% beträgt.

5. Formmasse nach einem der Ansprüche 1 bis 4, dadurch gekennzeichnet, daß die Formmasse als Komponente C ein delaminiertes Schichtsilikat enthält.

6. Verfahren zur Herstellung von Formmassen nach einem der Ansprüche 1 bis 5 durch
Lösen der Komponenten A1 und A2 in Wasser,
Kondensation des so erhaltenen wäßrigen Gemisches bei einem Druck in einem Bereich von 1 bis 20 bar und einer Temperatur im Bereich von 200 bis 300°C zu einem Präpolymer,
Nachkondensation des so erhaltenen Präpolymers durch Festphasenkondensation mit überhitztem Wasserdampf bei einem Druck im Bereich von 0 bis 5 bar und einer Temperatur im Bereich von 5 bis 50°C unterhalb des Schmelzpunktes und
gegebenenfalls Mischen des Copolyamids A mit den Komponenten B, C und/oder D.

7. Verfahren nach Anspruch 6, dadurch gekennzeichnet, daß es kontinuierlich durchgeführt wird.

8. Verwendung einer Formmasse nach einem der Ansprüche 1 bis 5 zur Herstellung von Formkörpern, Fasern oder Folien.

9. Formkörper aus einer Formmasse nach einem der Ansprüche 1 bis 5.

10. Fasern oder Folien aus einer Formmasse nach einem der Ansprüche 1 bis 5.
